# EUROPÄISCHE PATENTSCHRIFT

(11) **EP 1 030 768 B1**
(45) Veröffentlichungstag und Bekanntmachung des Hinweises auf die Patenterteilung: **11.09.2002**
(21) Anmeldenummer: 98959842.0
(22) Anmeldetag: 04.11.1998
(51) Int. Cl.: B29C 45/68

(54) **FORMSCHLIESSEINHEIT FÜR EINE SPRITZGIESSMASCHINE**
MOLD CLOSURE UNIT FOR AN INJECTION MOLDING MACHINE
UNITE DE FERMETURE DE MOULE POUR MACHINE DE MOULAGE PAR INJECTION

(30) Priorität: 12.11.1997 DE 19750057
(43) Veröffentlichungstag der Anmeldung: 30.08.2000
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9807037
(87) Internationale Veröffentlichungsnummer: WO99024235

(56) Entgegenhaltungen:
- EP-A- 0 674 985
- DE-A- 19 536 565
- DE-C- 4 411 651
- PATENT ABSTRACTS OF JAPAN vol. 14, no. 206 (M-0967), 26. April 1990 -& JP 02 045111 A (MITSUBISHI HEAVY IND LTD), 15. Februar 1990
- PATENT ABSTRACTS OF JAPAN vol. 14, no. 351 (M-1003), 30. Juli 1990 -& JP 02 121807 A (MITSUBISHI HEAVY IND LTD), 9. Mai 1990

## Beschreibung

Die Erfindung betrifft eine Formschließeinheit für eine Spritzgießmaschine zur Verarbeitung von Kunststoffen und anderen plastifizierbaren Massen wie keramische Massen, pulverige Massen und dergleichen nach dem Oberbegriff des Anspruches 1.

Aus Patent Abstract of Japan, vol. 14 no. 206 (M-0967) und der zugehörigen JP 02. 045111 A ist eine Vorrichtung bekannt, die zum Beispiel auch zu einem seriellen Schließen in Verbindung mit einer Formschließeinheit eingesetzt werden kann. Zunächst wird mit einer ersten Einrichtung ein beweglicher Formträger bis etwa zum Formschluß mit dem stationären Formträger überführt, während dann die eigentliche Schließkraft von einer weiteren Einrichtung aufgebaut wird. Als erste Einrichtung ist eine Welle vorgesehen, die gegenüber einem Abstützelement drehbar gelagert ist Über eine zweite Einrichtung können zusätzlich Kräfte über die Welle übertragen werden. Um dabei die kraftübertragenden Gewindeteile weitestgehend aus dem Kraftfluß auszukoppeln, wird eine Schaltkammer zwischen Abstützelement und dem Kraftübertragungselement angeordnet Wird die Schaltkammer unter Druck gesetzt, wird die Rotation der Welle gestoppt und der Druck über die Welle selbst als Kraftübertragungselement übertragen. Die Schaltkammer kann zwar je nach Wunsch beeinflusst werden, um einen beliebigen frei schaltbaren Übergang zwischen der ersten und der zweiten Einrichtung vor oder nach Berührung der Formhälften aneinander zu erzielen, so dass der Übergang nicht mehr von der Lage der ersten Einrichtung abhängig ist. Ebenso kann der Abstand zwischen den miteinander in Anlage kommenden Teilen jederzeit unabhängig von einer zusätzlich notwendigen Verformung aufgehoben werden. Sichergestellt wird dort jedoch lediglich, dass die Welle nicht mehr weiter rotiert, die Bauteile des Antriebs sind dennoch sämtlichen Kräften unterworfen.

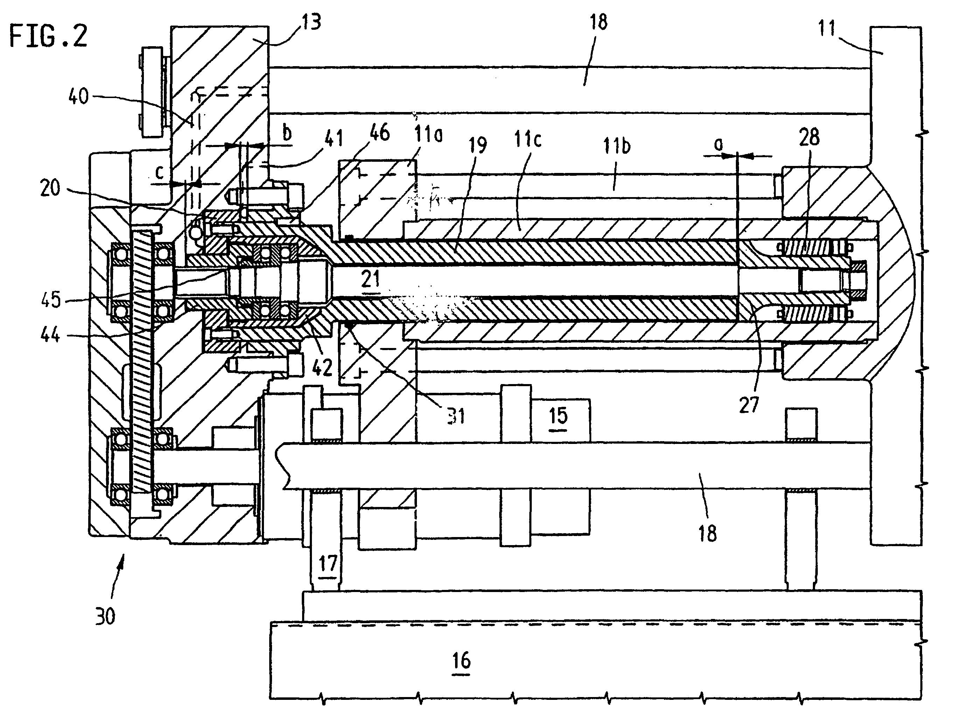

Aus der EP-A 674 985 ist eine Formschließeinheit bekannt, bei der auch ein serielles Schließen verwirklicht wird. Um die erste Einrichtung und insbesondere den dort verwendeten Spindelantrieb aus dem beim Aufbau der Schließkräfte entstehenden Kraftfluß auszukoppeln, werden gemäß der dortigen Figur 2 elastische Rückhaltemittel in Form von Federn vorgesehen. Bei Überschreiten einer vorbestimmten Kraft sorgen diese dafür, daß der Spindelantrieb gegen passives Rückdrehen gesichert ist und die Kräfte nicht mehr den Antrieb der ersten Einrichtung belasten. Die dafür vorgesehenen Federn besitzen vorbestimmte unveränderliche Federkräfte, so daß, sobald die Federn eingebaut sind, die erste Einrichtung unabhängig vom Spritzteil oder von den sonstigen Maschinenparametern die vorbestimmte Kraft aufbringen muß. Diese Kraft wäre nur durch einen Austausch der als Entkopplungsmittel dienenden Feder gegen weichere oder härtere Federn veränderlich. Erst wenn durch die zweite Einrichtung die Kraft der Rückhaltemittel überdrückt ist und damit eine hierfür erforderliche Verformung eingetreten ist, haben diese Rückhaltemittel keinen Einfluß mehr auf die Zuhaltekraft, so daß erst ab diesem Zeitpunkt die Zuhaltekraft steuerbar und regelbar wird. Ohne eine für die Verformung erforderliche Gegenkraft kann ein Auskuppeln der ersten Einrichtung und damit ein Übergang auf die zweite Einrichtung nicht stattfinden.

Aus dem US-A 3,712,774 ist eine hydraulische Formhöhenverstellung bekannt, bei der hinter einem Kniehebelmechanismus eine Lagerung des Kniehebelmechanismus hydraulisch in Schließrichtung bewegbar ist. In einer einmal fixierten Position kann das System dann festgehalten werden. Ein serielles Schließen oder eine Beeinflussung der Zuhaltekraft erfolgt dadurch nicht.

Aus dem US-A 3,910,736 ist für einen Kniehebel eine Lagerung der als Holme ausgebildeten Kraftübertragungselemente in Hydraulikkissen bekannt. Der Druck in diesen Hydraulikkissen ist einstellbar und kann bei Überschreiten über ein Rückschlagventil entlastet werden. Diese Druckkissen sollen die Schließkraft so aufbringen, so daß zwar ein bedarfsweise serielles Schließen erfolgen kann, ein Entkoppeln der ersten Einrichtung ist jedoch schon deshalb nicht möglich, da die Hydraulikkissen auf der dem Kniehebelmechanismus gegenüberliegenden Seite der Formschließeinheit angeordnet sind.

Ausgehend von diesem Stand der Technik liegt der vorliegenden Erfindung die Aufgabe zugrunde, eine Formschließeinheit der eingangs genannten Gattung derart weiterzubilden, dass eine optimale Anpassung der Bauteile an die jeweiligen Anforderungen ermöglicht wird.

Diese Aufgabe wird durch eine Formschließeinheit mit den Merkmalen des Anspruches 1 gelöst.

Um die erste Einrichtung von den Kräften, die beim Formschluß entstehen, zu entkoppeln, wird jetzt ein zusätzliches Druckrohr vorgesehen. Wird der durch die mit Druck beaufschlagte Schaltkammer aufrechterhaltene Abstand überwunden, wird nicht nur die Welle stillgelegt, gleichzeitig wird jetzt als weiteres Kraftübertragungselement das Druckrohr eingesetzt. Dadurch kann das Druckrohr auf die erheblich höheren Kräfte dimensioniert werden, die beim Formschluss erforderlich sind, während die Welle auf die geringeren Kräfte dimensioniert werden kann, die beim Schließen und Öffnen der Gießform entstehen. Die Welle ist damit in erster Linie zur Rotation als Positioniersystem ausgelegt, was gleichzeitig zur Verringerung der rotatorisch zu bewegenden Massen beiträgt. Die in der Schaltkammer aufgebrachte Kraft positioniert die erste Einrichtung, kann aber auch dynamische Verfahrkräfte ausgleichen, die während der Bewegung des beweglichen Formträgers entstehen.

### KURZBESCHREIBUNG DER FIGUREN

- Fig. 1: Eine Seitenansicht der auf dem Maschinenfuß einer Spritzgießmaschine befindlichen Formschließeinheit,
- Fig. 2: einen vergrößerten, teilweise geschnittenen Ausschnitt aus Fig. 1 im Bereich der Antriebseinrichtungen,
- Fig. 3: einen vergrößerten Ausschnitt aus Fig. 2 im Bereich der Lagerung der ersten Einrichtung und im Bereich des Spindelkopfs,
- Fig. 4: eine Darstellung gemäß Fig. 2 eines weiteren Ausführungsbeispiels unter Anordnung der Antriebe am beweglichen Formträger.

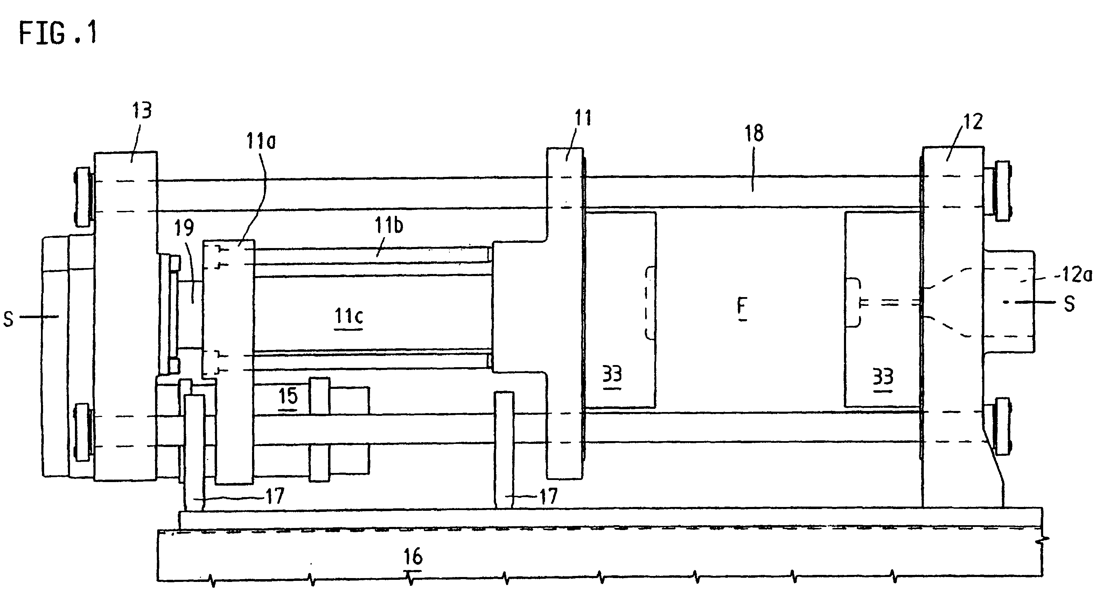

Fig. 1 zeigt die auf dem Maschinenfuß 16 angeordnete Formschließeinheit einer Spritzgießmaschine, die mittels einer zeichnerisch nicht dargestellten Spritzgießeinheit Kunststoffe und andere plastifizierbare Materialien wie z. B. keramische Massen, pulverige Massen durch eine Durchtrittsöffnung 12a des stationären Formträgers 12 in den Formhohlraum einer Form 33 einspritzt. Mit dem stationären Formträger 12 zusammenwirkend ist ein beweglicher Formträger 11, wobei zwischen den beiden Formträgern ein Formspannraum F zur Aufnahme einer Gießform 33 ausgebildet ist.

Eine erste Einrichtung 30 ist zur Bewegung des beweglichen Formträgers 11 auf den stationären Formträger 12 zu und von diesem weg vorgesehen. Eine zweite Einrichtung, im Ausführungsbeispiel die Druckkammer 40, ist vorgesehen, die nach der ersten Einrichtung und während des Formschlusses der Gießform 33 betätigt wird, um die Schließkraft aufzubauen. Damit bringt die erste Einrichtung 30 die Teile der Gießform 33 bereits bis etwa zur Anlage, während die zweite Einrichtung bei Betätigung hauptsächlich zum Aufbau der Schließkraft vorgesehen ist. Da bei Betätigung der zweiten Einrichtung zugleich der Abstand a zu Null wird, wird die erste Einrichtung an einer weiteren Rotation des drehbaren Elements, hier die Welle 21 mit Spindelkopf 27, gehindert, so daß dieser Antrieb gegen ein passives Rückdrehen gesichert ist.

Um der ersten Einrichtung 30 die Bewegung des beweglichen Formträgers zu ermöglichen, stützt sich diese an wenigstens einem Abstützelement 13 - es können auch mehrere Element nebeneinander vorgesehen sein - ab. Dieses Abstützelement 13 steht mittels Übertragungsmittel, im Ausführungsbeispiel mittels der Holme 18, mit dem stationären Formträger 12 in Verbindung. Der bewegliche Formträger 11 ist auf den Holmen 18 geführt. Alternativ kann ein an sich bekanntes Kraftübertragungsmittel vorgesehen werden, das um den Formspannraum herumgeführt wird, um eine "holmfreie" Maschine zu gestalten und damit den Zugang zum Formspannraum F zu erleichtern.

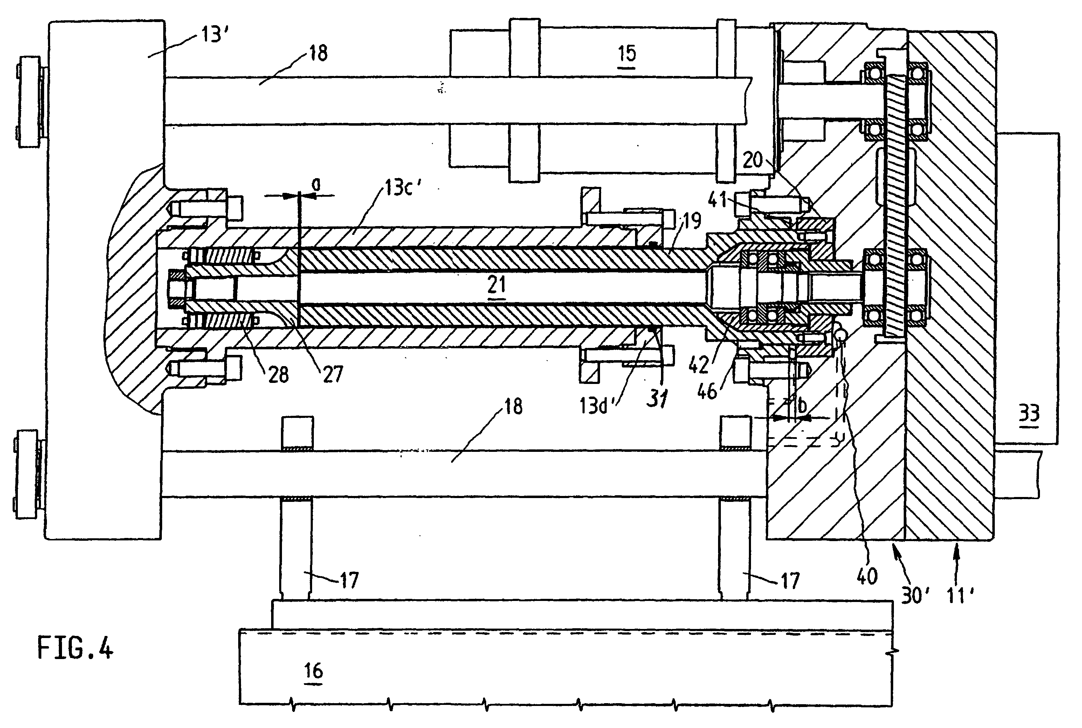

Die elektromechanische erste Einrichtung 30 umfaßt ein nicht drehbares Element und das drehbare Element, dessen Drehbarkeit unter Wirkung der beliebig schaltbaren Schaltkammer 41 als Entkopplungsmittel gewährleistet ist. Bei Aufbau der Schließkraft durch die zweite Einrichtung kommt das drehbare Element der ersten Einrichtung 30 nach druckfrei Schalten der Schaltkammer 41 oder nach Überschreiten der vorbestimmbaren Kraft in der Schaltkammer im Ausführungsbeispiel in Anlage an einem durch eine Radialsicherung 46 gegen Rotation gesicherten Druckrohr 19. Diese Anlage kann bei Umkehrung des Prinzips auch am beweglichen Formträger 11, am Abstützelement 13' (Fig. 4) oder am nicht drehbaren Element der ersten Einrichtung erfolgen. Durch diese Anlage wird sichergestellt, daß das drehbare Element bei Aufbau weiterer Kräfte nicht mehr drehbar ist, so daß die erste Einrichtung 30 gegen passives Rückdrehen gesichert ist und der Antriebsmotor 15 der ersten Einrichtung 30 bei Aufbringung weiterer Kräfte hiervon nicht mehr beeinflußt wird. Das drehbare Element, im Ausführungsbeispiel die Welle 21 ist damit aus dem Kraftfluß rotatorisch und translatorisch ausgekoppelt. Das Druckrohr 19 ist als Kraftübertragungselement vorgesehen, um dennoch die beim Aufbau der Schließkraft entstehenden Kräfte auf den beweglichen Formträger 11 unter Zwischenschaltung von z.B. Spindelkopf 27, Planeten 28 und Gewindehülse 11c zu übertragen.

Die mit Hydraulikmedium beaufschlagbare Schaltkammer 41 ist zwischen dem Kraftübertragungselement und dem Abstützelement 13 angeordnet. Durch Beeinflussung des Drucks in der Schaltkammer 41 und/oder der Druckkammer 40 ist bedarfsweise die vorbestimmbare Kraft veränderbar, die bis zur Anlage überwunden werden muß, sofern die Schaltkammer 41 nicht druckfrei geschalten wird. Die Drucksäule in der Schaltkammer 41 wirkt somit bedarfsweise als "veränderliche Feder". Damit kann z.B. die Zuhaltekraft gesteuert oder geregelt werden, was z.B. bei der Beeinflussung des Forminnendrucks unter Einfluß der Formschließeinheit von Vorteil ist. Während im Stand der Technik nur ein Kraftbegrenzer vorhanden war, kann jetzt ein gesondertes Positioniersystem vorgesehen werden, das vom Kraftfluß getrennt wird, sobald die aus der Schaltkammer vorbestimmbare Kraft erreicht wird.

Bedarfsweise kann die Schaltkammer 41 auch zwischen dem beweglichen Formträger 11 und dem Druckrohr 19 angeordnet sein. Mit dem beweglichen Formträger 11 als bauliche Einheit gemeinsam bewegbar ist ein Stützelement 11a, das über Bolzen 11b mit dem beweglichen Formträger verspannt ist. Zwischen dem Stützelement 11a und dem beweglichen Formträger 11 wird eine Gewindehülse 11c eingespannt, die das nicht drehbare Element des elektromechanischen Antriebs darstellt. Sowohl Stützelement als auch der bewegliche Formträger sind an den Holmen 18 geführt, wobei die Formschließeinheit selbst in Schließrichtung beweglich auf weiteren Abstützelementen 17 am Maschinenfuß abgestützt ist.

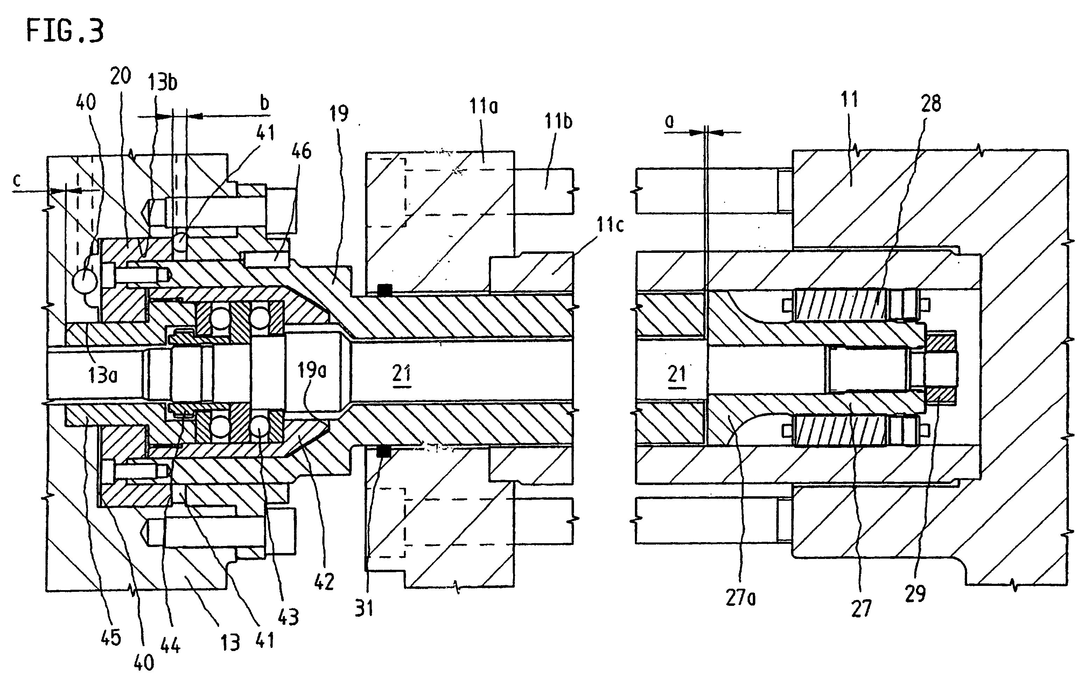

Die erste Einrichtung 30 besitzt als drehbares Element eine Welle 21. Diese Welle 21 hat an ihrem in den Figuren 2 und 3 rechten Ende einen Spindelkopf 27. Dieser Spindelkopf ist von der Gewindehülse 11c umgeben. Bei Abschalten des Drucks in der Schaltkammer 41 oder bei Überchreiten der aus der Schaltkammer 41 vorbestimmbaren Kraft wird der Abstand a zwischen. Druckrohr 19 und Spindelkopf 27, unter Einsatz der zweiten Einrichtung überwunden, bis die Anlagefläche 27a am Druckrohr 19 zur Anlage kommt. Eine Rotation des drehbaren Elements der ersten Einrichtung ist damit nur möglich, wenn der Abstand a ungleich Null ist. Sobald die zweite Einrichtung zugeschaltet ist, wird a jedoch zu Null, spätestens wenn die Schaltkammer 41 druckfrei geschaltet ist oder der Druck in der Schaltkammer von der zweiten Einrichtung überschritten wird.

Das Druckrohr 19 liegt koaxial zur Welle 21. Mit dem Spindelkopf wirken mehrere Planeten 28 zusammen, wobei sich bei Betätigung die relative Lage zwischen Spindelkopf 27 und Planeten 28 nicht verändert. Die Bewegung erfolgt vielmehr im Außenbereich, also zwischen den Planeten 28 und der Gewindehülse 11c, was den Vorteil einer besseren Kraftübertragung aufgrund des besseren Eingriffs der Gewindegänge ineinander hat. Fig. 3 verdeutlicht, daß auch die Gewindehülse 11c koaxial sowohl zur Welle 21 als auch zum Druckrohr 19 ist, so daß sich äußerlich das Erscheinungsbild eines hydraulischen Antriebs ergibt, als ob eine Kolbenstange in einen Zylinder eintaucht. Diese Ausgestaltung der innen liegenden Welle 21 trägt zum Schutz der Welle z.B. vor Schmutz als auch zum Schutz von unbedachtem Personal bei, da rotierende Teile geschützt sind. Gleichzeitig ergibt sich eine Geräuschisolierung und kann im Innenraum eine Schmierung vorgesehen werden. Um den Antrieb vor Unreinheiten zu schützen, ist zwischen dem Stützelement 11a und dem Druckrohr 19 eine Dichtung 31 vorgesehen.

Das als Druckrohr 19 ausgebildete Kraftübertragungselement ist in Schließrichtung unter Veränderung der Abstände b und c axial beweglich gelagert. Im einfachsten Fall wird die Schaltkammer 41 mit Hydraulikmedium beaufschlagt, bis sich bei c = 0 eine definierte Endlagen-Positionierung sowohl der ersten Einrichtung 30 als auch des Druckrohrs 19 einstellt und sich ein maximaler Abstand a ergibt. Bei Betätigung der ersten Einrichtung wird der bewegliche Formträger bis zu einem beliebigen Spalt zwischen den Formhälften oder bis zum Formschluß gefahren, wobei sich spätestens bei Anlage der beider Hälften der Gießform aneinander eine Kraft und damit eine Verformung einstellen würde, die in Abhängigkeit des Kräfteverhältnissese zwischen der Schaltkammer 41 und der Druckkammer 40 zu einer früheren oder späteren Verringerung des Abstandes a zwischen Druckrohr 19 und Spindelkopf 27 zu Null und damit zur Anlage führt. Durch diese Anlage werden die Welle 21 und damit der Spindelkopf 27 an einer weiteren Rotation gehindert. Üblicherweise wird jedoch an einer beliebigen Stelle die Druckkammer 40 aktiv zugeschalten, so daß, gleichgültig ob ein Formschluß bereits erreicht war oder nicht, die Schaltkammer 41 aktiv oder passiv entlastet wird.

Weitere Kräfte können nun nicht mehr durch den Antriebsmotor 15 und die Welle 21 aufgebracht werden. Stattdessen kann entweder das Abstützelement 13, wie in der EP-A 674 985 vorgeschlagen, von einer weiteren Einrichtung beaufschlagt werden, oder wie im Ausführungsbeispiel kann das Druckrohr aus einer weiteren Hydraulikkammer, der Druckkammer 40 beaufschlagt werden, um die Schließkräfte aufzubauen. Hierbei werden die Kräfte über das Druckrohr 19 auf den Spindelkopf, von diesem auf die Planeten 28 und von diesen auf die Gewindehülse 11c und damit auf den beweglichen Formträger 11 übertragen.

Das Druckrohr 19 ist mit einem Kolben 20 verbunden. Die Lage des Druckrohrs ist einerseits durch den Druck des Hydraulikmediums in der Schaltkammer 41 beeinflußbar. Andererseits werden Kolben 20 und Druckrohr 19 aus einer als zweite Einrichtung zum Aufbau der Schließkraft ausgebildeten Druckkammer 40 beaufschlagt. Selbstverständlich kann nicht nur eine derartige Einrichtung, sondern es können auch mehrere parallel nebeneinander liegende Einrichtungen vorgesehen sein, um den beweglichen Formträger zu bewegen und die Schließkräfte aufzubauen. Der Kolben 20 ist ein Ringkolben, der die Welle 21 koaxial umgibt. Er begrenzt auf seinen einen Seite die Schaltkammer 41 und auf der anderen Seite die Druckkammer 40. Die Schaltkammer 41 wird ferner durch das Abstützelement 13 und die Außenseite des Druckrohrs 19 begrenzt. Die Druckkammer 40 ist im Abstützelement 13 gebildet, das mit einer weiteren Ausnehmung 13b den Kolben 20 führt. Zur Mitte hin ist die als Ringkammer ausgebildete Druckkammer 40 durch den Spannring 45 begrenzt. Dieser Spannring 45, der insofern zugleich eine Art Kolbenstange ist, umschließt die Welle 21 koaxial und ist seinerseits in einer Ausnehmung 13a des Abstützelements 13 geführt.

Wird die Schaltkammer 41 mit Hydraulikmedium beaufschlagt, so führt dies bedarfsweise bis zu einem Abstand c=0 des Spannrings 45 am Abstützelement 13. Dies wird dadurch bewirkt, daß das Druckrohr 19 mit einer Anlagefläche 19a eine mit dem Spannring 45 verbundene Lagerhülse 42 mitsamt den darin befindlichen Lagern 43 bewegt. Die Lager 43 ihrerseits sind gegenüber der Welle 21 durch eine Nutmutter 44 festgelegt.

Grundsätzlich können beide Hydraulikräume, also Schaltkammer 41 und Druckkammer 40 gleichzeitig mit Hydraulikmedium beaufschlagt werden und der Differenzdruck gesteuert oder geregelt werden. Nach Wunsch können dadurch die Maße und damit die Verformungen bis zum Auskoppeln der ersten Einrichtung aus dem Kraftfluß oder bis zur exakten Positionierung beeinflußt werden, wobei im Zusammenspiel mit bekannten Positionsmeßsystemen Lageregelungen des beweglichen Formträgers möglich sind. Meist wird jedoch während der Betätigung der ersten Einrichtung die Schaltkammer 41 beaufschlagt und druckfrei geschalten, sobald sich der Abstand a=0 ergeben soll, um auch die Schließkraft aus der Druckkammer 40 aufzubauen. Damit wird an beliebiger Stelle die zweite Einrichtung zuschaltbar, was bisher bei den Federn mit vorgegebener Federkraft nicht möglich war. Sobald sich bei Verringerung des Abstandes a zu Null die Anlage ergibt, wird der Antriebsmotor 15 auf Lageregelung geschaltet. Werden dann die Schließkräfte aufgebaut, so wird der Abstand c ungleich 0, so daß damit auch die Lagerung der Welle 21 aus dem Kraftfluß ausgekoppelt ist.

Fig. 4 zeigt in einem weiteren Ausführungsbeispiel eine Anordnung der Antriebseinheiten am beweglichen Formträger. Gleiche Teile wurden mit gleichen Bezugszeichen wie im ersten Ausführungsbeispiel bezeichnet, ähnliche, aber gleichwirkende Teile mit einem um einen Hochstrich ergänzten Bezugszeichen versehen. Der Antriebsmotor 15 und die erste Einrichtung 30' sind am beweglichen Formträger 11' angeordnet. Die drehfeste Gewindehülse 13c' ist - in Umkehrung des ersten Ausführungsbeispiels am Abstützelement 13' festgelegt und durch einen die Dichtung 31 tragenden Deckel 13d' verschlossen, der vom Druckrohr 19 durchgriffen ist.

Auch hier wird unter Betätigung der Schaltkammer 41 die Welle 21 solange gedreht, bis der Abstand a zu Null wird, sei es durch Zuschalten der Druckkammer 41 oder durch eine andere Krafteinwirkung. Die Welle 21 mit Spindelkopf 27 treibt die Planeten 28 an, die mit der Gewindehülse 13c' zusammenwirken. Wird der Abstand a = 0, werden die Kräfte Über das Druckrohr 19 übertragen.

### Bezugszeichenliste

- 11, 11': beweglicher Formträger
- 11a: Stützelement
- 11b: Bolzen
- 11c: Gewindehülse
- 12: stationärer Formträger
- 12a: Durchtrittsöffnung
- 13, 13': Abstützelement
- 13a: Ausnehmung
- 13b: weitere Ausnehmung
- 13c': Gewindehülse
- 13d': Deckel
- 15: Antriebsmotor
- 16: Maschinenfuß
- 17: Abstützelement
- 18: Übertragungsmittel (Holm)
- 19: Druckrohr
- 19a: Anlagefläche
- 20: Kolben
- 21: Welle
- 27: Spindelkopf
- 27a: Anlagefläche
- 28: Planet
- 30, 30': erste Einrichtung
- 31: Dichtung
- 33: Gießform
- 40: Druckkammer
- 41: Schaltkammer
- 42: Lagerhülse
- 43: Lager
- 44: Nutmutter
- 45: Spannring
- 46: Radialsicherung

- a: Abstand
- b: Wegbereich von 20
- c: Abstand
- s-s: Schließrichtung
- F: Formspannraum

## Patentansprüche

1. Formschließeinheit für eine Spritzgießmaschine zur Verarbeitung von Kunststoffen und anderen plastifizierbaren Massen mit
- einem stationären Formträger (12),
- einem beweglichen Formträger (11), der zwischen sich und dem stationären Formträger (12) einen Formspannraum (F) zur Aufnahme einer Gießform (33) ausbildet,
- einer ersten elektromechanischen Einrichtung (30) zur Bewegung des beweglichen Formträgers (11) auf den stationären Formträger (12) zu und von diesem weg, mit wenigstens einem drehbaren Element und einem damit zusammenwirkenden nicht-drehbaren Element,
- einer zweiten nach der ersten Einrichtung, während des Formschlusses der Gießform (33) betätigbaren Einrichtung zum Aufbau der Schließkraft,
- wenigstens einem Abstützelement (13) zur Abstützung zumindest der ersten Einrichtung (30), das durch Übertragungselemente (18) mit dem stationären Formträger (12) in Verbindung steht,
- wobei nach Betätigung der ersten Einrichtung (30) die Teile der Gießform (33) beim Zufahren der Gießform wenigstens nahezu in Anlage sind, während die zweite Einrichtung bei Betätigung hauptsächlich zum Aufbau der Schließkraft vorgesehen ist,
- wobei das drehbare Element der ersten Einrichtung (30) unter Wirkung eines Entkopplungsmittels drehbar gelagert ist und beim Aufbau der Schließkraft durch die zweite Einrichtung an einem der Teile, bestehend aus Abstützelement (13), nicht-drehbaren Elementen der ersten Einrichtung (30) oder beweglichem Formträger (11) anliegt und aus dem Kraftfluß ausgekoppelt ist,
- einem Kraftübertragungselement zur Übertragung der beim Aufbau der Schließkraft entstehenden Kräfte auf den beweglichen Formträger (11),
- wobei eine als Entkopplungsmittel ausgebildete, mit Hydraulikmedium beaufschlagbare Schaltkammer (41) zwischen dem Kraftübertragungselement und entweder dem Abstützelement (13) oder dem beweglichen Formträger (11) angeordnet ist, die unter Druck die Drehung des drehbaren Elements ermöglicht,
wobei der Druck des Hydraulikmediums in der Schaltkammer (41) ebenso zuschaltbar ist wie die zweite Einrichtung, **dadurch gekennzeichnet, dass** ein als Kraftübertragungselement ausgebildetes Druckrohr (19) unter Überwindung eines durch die mit Druck beaufschlagte Schaltkammer (41) aufrecht erhaltenen Abstandes (a) mit einem Spindelkopf (27) einer Welle (21) in Anlage kommt, die als drehbares Element der ersten Einrichtung (30) ausgebildet ist.

2. Formschließeinheit nach Anspruch 1, **dadurch gekennzeichnet, dass** die erste Einrichtung (30) die Welle (21) und eine den Spindelkopf (27) umgebende, als nicht drehbares Element ausgebildete Gewindehülse (11c) aufweist und dass das Druckrohr (19) mit dem Spindelkopf (27) der daraufhin passiven Welle (21) in Anlage kommt.

3. Formschließeinheit nach Anspruch 2, **dadurch gekennzeichnet, daß** das Druckrohr (19) koaxial zur Welle (21) angeordnet ist und daß der Spindelkopf (27) eine rotationssymmetrische Anlagefläche (27a) zur Anlage am Druckrohr aufweist.

4. Fomischließeinheit nach Anspruch 2, **dadurch gekennzeichnet, daß** mit dem Spindelkopf (27) der zumindest mittelbar am Abstützelement (13) gelagerten Welle (21) mehrere Planeten (28) zusammenwirken, deren relative Lage zum Spindelkopf bei Betätigung der ersten Einrichtung im wesentlichen unveränderlich ist und die bei Betätigung der ersten Einrichtung (30) mit der Gewindehülse (11c) zusammenwirken, die am beweglichen Formträger (11) festgelegt ist und die koaxial zum Kraftübertragungselement angeordnet ist und diese zumindest teilweise in sich aufnimmt.

5. Formschließeinheit nach Anspruch 1, **dadurch gekennzeichnet, daß** das als Druckrohr (19) ausgebildete Kraftübertragungselement in Schließrichtung axial beweglich gelagert ist und mit einem Kolben (20) verbunden ist.

6. Formschließeinheit nach Anspruch 5, **dadurch gekennzeichnet, dass** die jeweilige Lage des Druckrohrs (19) bestimmbar ist einerseits durch den Druck des Hydraulikmediums in der Schaltkammer (41), und daß der Kolben andererseits aus einer als zweite Einrichtung zum Aufbau der Schließkraft ausgebildeten Druckkammer (40) beaufschlagbar ist, die die Anlage erzeugt.

7. Formschließeinheit nach Anspruch 5, **dadurch gekennzeichnet, daß** der Kolben (20) ein eine als drehbares Element ausgebildete Welle (21) koaxial umgebender Ringkolben ist, der auf seiner einen Seite die Schaltkammer (41) und auf der anderen Seite die Druckkammer (40) begrenzt.

8. Formschließeinheit nach Anspruch 7, **dadurch gekennzeichnet, daß** der Kolben (20) auf einer als Spannring (45) ausgebildeten Kolbenstange gehalten ist, die die Welle (21) koaxial umschließt und in einer Ausnehmung (13a) des Abstützelements (13) geführt ist.

9. Formschüeßeinheit nach Anspruch 5, **dadurch gekennzeichnet, daß** die Druckkammer (40) im Abstützelement (13) gebildet ist, das zugleich mit einer weiteren Ausnehmung (13b) den Kolben (20) führt, und daß die Druckkammer (40) mittig durch eine als Spannring (45) ausgebildete Kolbenstange begrenzt ist.

10. Formschließeinheit nach Anspruch 5, **dadurch gekennzeichnet, daß** bei Beaufschlagung des Kolbens (20) mit Hydraulikmedium aus der Schaltkammer (41) das Druckrohr (19) mit einer Anlagefläche (19a) bedarfsweise so an einer mit dem Spannring (45) verbundenen Lagerhülse (42) anliegt, dass der Spannring am Abstützelement anschlägt.

11. Formschließeinheit nach Anspruch 5, **dadurch gekennzeichnet, daß** bei Beaufschlagung der Druckkammer (40) die Schaltkammer (41) druckfrei schaltbar ist.

## Claims

1. Mould-closing unit for an injection moulding machine for processing plastics materials and other plasticisable masses, having
- a stationary mould carrier (12),
- a mobile mould carrier (11) which forms between itself and the stationary mould carrier (12) a mould tentering space (F) to receive a mould (33),
- a first electromechanical device (30) for moving the mobile mould carrier (11) to and from the stationary mould carrier (12), with at least one rotatable element and a non-rotatable element co-operating therewith,
- a second device capable of being actuated after the first one, during the closure of the mould (33) to build up the locking pressure,
- at least one supporting element (13) to support at least the first device (30) and connected to the stationary mould carrier (12) by transmission elements (18),
- after actuation of the first device (30), the parts of the mould (33) being at least almost in abutment as the mould is being closed, whilst the second device is provided mainly to build up the locking pressure on actuation,
- the rotatable element of the first device (30) being mounted rotatable under the effect of a decoupling means and, as the locking pressure is built up by the second device, abutting against one of the parts, comprising supporting element (13), non-rotatable elements of the first device (30) or mobile mould carrier (11) and being decoupled from the force flux,
- a force transmission element to transmit the forces arising as the locking pressure is built up to the mobile mould carrier (11),
- a switching chamber (41), configured as a decoupling means and capable of being actuated by a hydraulic medium, being disposed between the force transmission element and either the supporting element (13) or the mobile mould carrier (11), which switching chamber enables under pressure the rotation of the rotatable element, the pressure of the hydraulic medium in the switching chamber (41) being just as connectable as the second device,
**characterised in that** a pressure pipe (19), configured as a force transmission element, by overcoming a spacing (a), maintained by the switching chamber (41) which is actuated by pressure, comes into contact with a spindle head (27) of a shaft (21) which is configured as the rotatable element of the first device (30).

2. Mould-closing unit according to claim 1, **characterised in that** the first device (30) has the shaft (21) and a threaded bush (11c), configured as a non-rotatable element, surrounding the spindle head (27), and **in that** the pressure pipe (19) comes into contact with the spindle head (27) of the thereafter passive shaft (21).

3. Mould-closing unit according to claim 2, **characterised in that** the pressure pipe (19) is disposed coaxial with the shaft (21) and **in that** the spindle head (27) has a rotationally symmetrical contact surface (27a) to abut against the pressure pipe.

4. Mould-closing unit according to claim 2, **characterised in that** that with the spindle head (27) of the shaft (21), mounted at least indirectly on the supporting element (13), co-operates a plurality of planets (28), the position of which relative to the spindle head on actuation of the first device is substantially unalterable and which, on actuation of the first device (30), co-operate with the threaded bush (11c) which is fixed on the mobile mould carrier (11) and which is disposed coaxially with the force transmission element and receives the latter in itself, at least partially.

5. Mould-closing unit according to claim 1, **characterised in that** that the force transmission element, configured as a pressure pipe (19), is mounted axially moveable in the closing direction and is connected to a piston (20).

6. Mould-closing unit according to claim 5, **characterised in that** the respective position of the pressure pipe (19) can be determined on the one hand by the pressure of the hydraulic medium in the switching chamber (41), and **in that** the piston, on the other hand, may be actuated from a pressure chamber (40), configured as the second device for building up the locking pressure and which produces the abutment.

7. Mould-closing unit according to claim 5, **characterised in that** the piston (20) is an annular piston coaxially surrounding a shaft (21) configured as a rotatable element, which piston delimits on its one side the switching chamber (41) and on the other side the pressure chamber (40).

8. Mould-closing unit according to claim 7, **characterised in that** the piston (20) is held on a piston rod configured as a tension ring (45), which rod surrounds the shaft (21) coaxially and is guided in a recess (13a) of the supporting element (13).

9. Mould-closing unit according to claim 5, **characterised in that** the pressure chamber (40) is formed in the supporting element (13), which simultaneously guides the piston (20) with a further recess (13b), and **in that** the pressure chamber (40) is delimited centrally by a piston rod configured as a tension ring (45).

10. Mould-closing unit according to claim 5, **characterised in that** when hydraulic medium from the switching chamber (41) is applied to the piston (20), the pressure pipe (19) abuts with one contact surface (19a) against a bearing bush (42) connected to the tension ring (45), in such a way that the tension ring strikes against the supporting element.

11. Mould-closing unit according to claim 5, **characterised in that** when the pressure chamber (40) is actuated, the switching chamber (41) can be switched pressure-free.

## Revendications

1. Unité de fermeture de moule pour une machine à mouler par injection pour le traitement de matières plastiques et d'autres masses plastifiables comportant :
- un porte-moule fixe (12),
- un porte-moule mobile (11) qui forme, entre lui-même et le porte-moule fixe (12), un espace de serrage de moule (F) destiné à recevoir un moule de coulée (33),
- un premier dispositif (30) électromécanique pour le déplacement du porte-moule mobile (11) vers le porte-moule fixe (12) et à partir de celui-ci, avec au moins un élément tournant et un élément non tournant coopérant avec le premier,
- un deuxième dispositif qui peut être actionné après le premier dispositif, pendant la fermeture par complémentarité de forme du moule de coulée (33), pour constituer la force de fermeture,
- au moins un élément d'appui (13) pour soutenir au moins le premier dispositif (30) et qui est en liaison, par des éléments de transmission (18), avec le porte-moule fixe (12),
- après actionnement du premier dispositif (30), au moment de la fermeture du moule de coulée (33), ses parties étant au moins presque en contact, tandis que l'actionnement du deuxième dispositif étant essentiellement prévu pour constituer la force de fermeture,
- l'élément tournant du premier dispositif (30) étant monté tournant sous l'action d'un moyen de désaccouplement, et s'appliquant, pendant la constitution de la force de fermeture sous l'effet du deuxième dispositif, contre l'une des parties, constituée de l'élément d'appui (13), contre des éléments non tournants du premier dispositif (30) ou contre le porte-moule mobile (11), et étant désaccouplé du flux des forces,
- un élément de transmission des forces pour transmettre les forces qui se produisent pendant la constitution de la force de fermeture, sur le porte-moule mobile (11),
- une chambre de commande (41), réalisée en tant que moyen de désaccouplement et pouvant être alimentée en fluide hydraulique, étant disposée entre l'élément de transmission de force et soit l'élément d'appui (13), soit le porte-moule mobile (12), et permettant, sous pression, la rotation de l'élément tournant, la pression du fluide hydraulique dans la chambre de commande (41) pouvant être mise en circuit comme le deuxième dispositif,
**caractérisée en ce qu'**un tube de pression (19), conformé en élément de transmission des forces, vient en contact, après avoir franchi une distance (a) maintenue par la chambre de commande (41) alimentée en pression, avec une tête de broche (27) d'un arbre (21) qui est réalisée en tant qu'élément tournant du premier dispositif (30).

2. Unité de fermeture de moule selon la revendication 1, **caractérisée en ce que** le premier dispositif (30) comporte l'arbre (21) et une douille filetée (11c) entourant la tête de broche (27) et réalisé en tant qu'élément non tournant, et **en ce que** le tube de pression (19) vient en contact avec la tête de broche (27) de l'arbre (21) en conséquence passif.

3. Unité de fermeture de moule selon la revendication 2, **caractérisée en ce que** le tube de pression (19) est disposé coaxialement à l'arbre (21) et **en ce que** la tête de broche (27) présente une surface de contact (27a) à symétrie de révolution destinée à s'appliquer contre le tube de pression.

4. Unité de fermeture de moule selon la revendication 2, **caractérisée en ce qu'**avec la tête de broche (27) de l'arbre (21), montée au moins indirectement sur l'élément d'appui (13), coopèrent plusieurs planétaires (28) dont la position relative par rapport à la tête de broche, lorsque le premier dispositif est actionné, est sensiblement invariable et qui, lorsque le premier dispositif (30) est actionné, coopèrent avec la douille filetée (c) qui est fixée sur le porte-moule mobile (11) et qui est disposée coaxialement à l'élément de transmission des forces et reçoit celui-ci au moins en partie.

5. Unité de fermeture de moule selon la revendication 1, **caractérisée en ce que** l'élément de transmission des forces, conformé en tube de pression (19), est monté axialement déplaçable dans le sens de fermeture et est relié à un piston (20).

6. Unité de fermeture de moule selon la revendication 5, **caractérisée en ce que** la position respective du tube de pression (19) peut être déterminée d'une part par la pression du fluide hydraulique de la chambre de commande (41), et **en ce que** d'autre part, le piston peut être sollicité à partir d'une chambre sous pression (40) réalisée en tant que deuxième dispositif pour constituer la force de fermeture.

7. Unité de fermeture de moule selon la revendication 5, **caractérisée en ce que** le piston (20) est un piston annulaire qui entoure coaxialement l'arbre (21) conformé en élément tournant et qui délimite, sur l'un de ses côtés, la chambre de commande (41) et sur l'autre côté, la chambre sous pression (40).

8. Unité de fermeture de moule selon la revendication 7, **caractérisée en ce que** le piston (20) est maintenu sur une tige de piston conformée en anneau de serrage (45), laquelle enferme coaxialement l'arbre (21) et est guidée dans un évidement (13a) de l'élément d'appui (13).

9. Unité de fermeture de moule selon la revendication 5, **caractérisée en ce que** la chambre sous pression (40) est formée dans l'élément d'appui (13) qui guide en même temps le piston (20), avec un autre évidement (13b), et **en ce que** la chambre sous pression (40) est délimitée au milieu par une tige de piston conformée en anneau de serrage (45).

10. Unité de fermeture de moule selon la revendication 4 ou 5, **caractérisée en ce que**, dans le cas où le fluide hydraulique provenant de la chambre de commande (41) agit sur le piston (20), le tube de pression (19) s'applique, par une surface de contact (19a), au besoin, contre une douille de palier (42) reliée à l'anneau de serrage (45), de manière que l'anneau de serrage vienne buter contre l'élément d'appui.

11. Unité de fermeture de moule selon la revendication 5, **caractérisée en ce que** dans le cas où la chambre sous pression (40) est alimentée, la chambre de commande (41) peut être commandée sans pression.
